(19) Europäisches Patentamt / European Patent Office / Office européen des brevets

(11) **EP 3 963 539 B1**

(12) **FASCICULE DE BREVET EUROPEEN**

(45) Date de publication et mention de la délivrance du brevet:
**19.07.2023 Bulletin 2023/29**

(21) Numéro de dépôt: **20720493.4**

(22) Date de dépôt: **28.04.2020**

(51) Classification Internationale des Brevets (IPC):
**G06T 5/00** (2006.01)

(52) Classification Coopérative des Brevets (CPC):
**G06T 5/005;** G06T 2207/10048

(86) Numéro de dépôt international:
**PCT/EP2020/061810**

(87) Numéro de publication internationale:
**WO 2020/221773 (05.11.2020 Gazette 2020/45)**

(54) **PROCEDE ET DISPOSITIF POUR RETIRER LA REMANENCE DANS UNE IMAGE INFRAROUGE D'UNE SCENE CHANGEANTE**

VERFAHREN UND VORRICHTUNG ZUM ENTFERNEN VON REMANENZ IN EINEM INFRAROTBILD EINER SICH ÄNDERNDEN SZENE

METHOD AND DEVICE FOR REMOVING REMANENCE IN AN INFRARED IMAGE OF A CHANGING SCENE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.04.2019 FR 1904565**

(43) Date de publication de la demande:
**09.03.2022 Bulletin 2022/10**

(73) Titulaire: **LYNRED**
**91127 Palaiseau (FR)**

(72) Inventeurs:
• **DURAND, Alain**
**38500 VOIRON (FR)**
• **HARANT, Olivier**
**38430 SAINT-JEAN-DE-MOIRANS (FR)**

(74) Mandataire: **Cabinet Beaumont**
**4, Place Robert Schuman**
**B.P. 1529**
**38025 Grenoble Cedex 1 (FR)**

(56) Documents cités:
**EP-A2- 1 727 359     EP-A2- 2 632 150**

• **RONG-CHI CHANG ET AL: "Photo Defect Detection for Image Inpainting", MULTIMEDIA, SEVENTH IEEE INTERNATIONAL SYMPOSIUM ON IRVINE, CA, USA 12-14 DEC. 2005, PISCATAWAY, NJ, USA,IEEE, 12 décembre 2005 (2005-12-12), pages 403-407, XP010870562, DOI: 10.1109/ISM.2005.91 ISBN: 978-0-7695-2489-4**
• **MOU XIN-GANG ET AL: "Nonuniformity correction algorithm based on Gaussian mixture model", INTERNATIONAL SYMPOSIUM ON PHOTOELECTRONIC DETECTION AND IMAGING 2011: ADVANCES IN INFRARED IMAGING AND APPLICATIONS, SPIE, 1000 20TH ST. BELLINGHAM WA 98225-6705 USA, vol. 8193, no. 1, 25 août 2011 (2011-08-25), pages 1-8, XP060022078, DOI: 10.1117/12.900973**

**Description**

La présente demande de brevet revendique la priorité de la demande de brevet français FR1904565 déposée le 30 avril 2019.

Domaine technique

La présente description concerne de façon générale le domaine de la capture d'images infrarouges, et en particulier un procédé et un dispositif pour retirer la rémanence dans une image infrarouge.

Technique antérieure

Les microbolomètres sont un type de caméra infrarouge (IR) non refroidi utilisé pour capturer des images thermiques d'une scène d'image. De telles caméras IR comprennent en général un agencement de détecteurs sensibles à l'infrarouge formant une matrice de pixels (cf. EP1727359 A2) . Chaque pixel de la matrice de pixels convertit une température mesurée au niveau du pixel en un signal électrique correspondant, généralement une tension, qui à son tour est converti par un convertisseur analogique-numérique, ADC, (de l'anglais Analog to Digital Converter) en un signal de sortie numérique.

Chaque pixel d'un microbolomètre comprend une membrane suspendue au-dessus d'un substrat. La membrane comprend une couche d'absorption qui absorbe de l'énergie à partir de la lumière IR frappant le pixel, amenant sa température à s'élever en fonction de l'intensité de la lumière IR. La membrane comprend aussi par exemple une couche thermique, qui a comme propriété que sa résistance est modifiée par cette élévation de température, et le pixel peut ainsi être lu en détectant le changement de résistance de cette couche thermique, qui est thermiquement reliée à la couche d'absorption.

Les capteurs IR non refroidis comme les microbolomètres peuvent souffrir d'un artefact de capture d'image connu comme étant la rémanence, qui survient lorsqu'un flux à température élevée est reçu par la matrice de pixels. Par exemple, un tel flux à température élevée pourrait être causé par le soleil ou une autre source de chaleur intense, et provoque une modification de la résistivité des pixels concernés. Il faut un certain temps pour que la résistance de ces pixels revienne à un niveau normal après que la température du pixel a redescendu, ce qui provoque une dégradation de la qualité d'image qui peut durer quelques minutes ou jusqu'à quelques jours, en fonction du niveau du flux.

Dans le cas de caméras comportant des obturateurs mécaniques, les algorithmes de retrait d'artefacts de rémanence sont relativement simples. Cependant, on rencontre une difficulté technique pour retirer les artefacts de rémanence dans des images capturées par des capteurs IR non refroidis sans obturateurs.

Résumé de l'invention

Un objet de modes de réalisation de la présente description est de répondre au moins partiellement à une ou plusieurs difficultés de l'art antérieur.

Selon un aspect, on prévoit un procédé pour retirer, par un dispositif de traitement d'image, des artefacts de rémanence d'une image d'une séquence d'images capturée par un dispositif de capture d'images infrarouges, le procédé comprenant : retoucher par une méthode d'inpainting une zone de rémanence dans l'image pour générer une image retouchée ; générer une mesure de rémanence pour au moins certains pixels dans l'image sur la base de l'image retouchée ; et retirer des artefacts de rémanence d'au moins certains pixels de l'image sur la base d'une estimation de rémanence pour chacun desdits au moins certains pixels, chaque estimation de rémanence étant générée sur la base des mesures de rémanence d'une pluralité des images dans la séquence.

Selon un mode de réalisation, l'estimation de rémanence est une estimation de rémanence moyenne. Par exemple, l'estimation de rémanence moyenne correspond à une estimation de rémanence moyenne instantanée pour chacun desdits au moins certains pixels.

Selon un mode de réalisation, la génération de la mesure de rémanence pour au moins certains pixels dans l'image comprend une soustraction, à partir de chaque valeur de pixel desdits au moins certains pixels de l'image, d'une valeur de pixel d'un pixel correspondant dans l'image retouchée.

Selon un mode de réalisation, le procédé comprend en outre une détection de la zone de rémanence dans l'image.

Selon un mode de réalisation, la zone de rémanence comprend moins de 75 % de pixels de l'image.

Selon un mode de réalisation, le procédé comprend en outre le calcul de l'estimation de rémanence pour chacun desdits au moins certains pixels en calculant une moyenne mobile des mesures de rémanence de l'image et d'au moins une image précédente dans la séquence.

Selon un mode de réalisation, la moyenne mobile est basée sur une fenêtre glissante de m images dans la séquence, m étant compris entre 20 et 150.

Selon un mode de réalisation, le procédé comprend en outre un calcul de l'estimation de rémanence pour chacun desdits au moins certains pixels en appliquant un filtrage de Kalman.

Selon un mode de réalisation, le calcul de l'estimation de rémanence en appliquant un filtrage de Kalman comprend : estimer *a priori* la rémanence de chacun desdits au moins certains pixels de l'image sur la base d'une estimation de rémanence corrigée précédente de chacun desdits au moins certains pixels et d'un modèle de la décroissance exponentielle de la rémanence ; et corriger, pour chacun desdits au moins certains pixels de l'image, la rémanence estimée sur la base de la mesure de rémanence correspondante pour obtenir une estimation *a posteriori*.

Selon un mode de réalisation, le procédé comprend en outre une détection que la séquence d'images correspond à une scène changeante avant de retirer les artefacts de rémanence de l'image.

Selon un autre aspect, on prévoit un support de stockage non transitoire mémorisant des instructions d'ordinateur qui, lorsqu'elles sont exécutées par un processeur d'un dispositif de traitement d'image, amènent la mise en oeuvre du procédé susmentionné.

Selon un autre aspect, on prévoit un dispositif de traitement d'image comprenant : au moins une mémoire mémorisant une image d'une séquence d'images capturée par un dispositif de capture d'images infrarouges et une ou plusieurs mesures de rémanence d'au moins une image précédente dans la séquence ; et un ou plusieurs processeurs agencés pour retirer des artefacts de rémanence de l'image : en retouchant par une méthode d'inpainting une zone de rémanence dans l'image pour générer une image retouchée ; en générant une mesure de rémanence pour au moins certains pixels dans l'image sur la base de l'image retouchée ; et en retirant des artefacts de rémanence d'au moins certains pixels de l'image sur la base d'une estimation de rémanence pour chacun desdits au moins certains pixels, chaque estimation de rémanence étant générée sur la base des mesures de rémanence d'une pluralité des images dans la séquence.

Selon un mode de réalisation, l'estimation de rémanence est une estimation de rémanence moyenne. Par exemple, l'estimation de rémanence moyenne correspond à une estimation de rémanence moyenne instantanée pour chacun desdits au moins certains pixels.

Selon un autre aspect, on prévoit un dispositif de capture d'images infrarouges, comprenant : une matrice de microbolomètres ; et le dispositif de traitement d'image susmentionné.

Selon un autre aspect, on prévoit une caméra infrarouge comprenant le dispositif de capture d'images infrarouges susmentionné.

Selon encore un autre aspect, on prévoit un procédé pour retirer, par un dispositif de traitement d'image, des artefacts de rémanence d'une image d'une séquence d'images capturée par un dispositif de capture d'images infrarouges, le procédé comprenant : générer une mesure de rémanence pour au moins certains pixels dans l'image sur la base d'une différence entre les valeurs de pixels de l'image et les valeurs de pixels d'une image précédente de la séquence ; et retirer des artefacts de rémanence d'au moins certains pixels de l'image sur la base d'une estimation de rémanence pour chacun desdits au moins certains pixels, chaque estimation de rémanence étant générée sur la base de la mesure de rémanence et d'une ou plusieurs estimations de rémanence précédentes desdits au moins certains pixels et d'un modèle de la décroissance exponentielle de la rémanence.

Selon un mode de réalisation, l'estimation de rémanence est une estimation de rémanence moyenne. Par exemple, l'estimation de rémanence moyenne correspond à une estimation de rémanence moyenne instantanée pour chacun desdits au moins certains pixels.

Selon un mode de réalisation, la génération de la mesure de rémanence pour au moins certains pixels x dans l'image implique le calcul :

[Math 1]

$$\omega *_{n,x} = f_{n,x} - f_{n-1,x}$$

où $f_n$ est l'image et $f_{n-1}$ est l'image précédente.

Selon un mode de réalisation, le procédé comprend en outre la génération de l'estimation de rémanence pour chacun desdits au moins certains pixels en appliquant un filtrage de Kalman.

Selon un mode de réalisation, la génération de l'estimation de rémanence en appliquant un filtrage de Kalman comprend : estimer *a priori* la rémanence de chacun desdits au moins certains pixels de l'image sur la base d'une estimation de rémanence corrigée précédente de chacun desdits au moins certains pixels et du modèle de la décroissance exponentielle de la rémanence ; et corriger, pour chacun desdits au moins certains pixels de l'image, la rémanence estimée sur la base de la mesure de rémanence correspondante pour obtenir une estimation *a posteriori*.

Selon un mode de réalisation, le procédé comprend en outre une détection que la séquence d'images correspond à une scène statique avant de retirer les artefacts de rémanence de l'image.

Selon encore un autre aspect, on prévoit un support de stockage non transitoire mémorisant des instructions d'ordinateur qui, lorsqu'elles sont exécutées par un processeur d'un dispositif de traitement d'image, amènent la réalisation du procédé susmentionné.

Selon encore un autre aspect, on prévoit un dispositif de traitement d'image, comprenant : au moins une mémoire mémorisant une image d'une séquence d'images capturée par un dispositif de capture d'images infrarouges et une ou plusieurs mesures de rémanence d'au moins une image précédente dans la séquence ; et un ou plusieurs processeurs agencés pour retirer des artefacts de rémanence de l'image : en générant une estimation de rémanence pour au moins certains pixels dans l'image sur la base d'une différence entre les valeurs de pixels de l'image et les valeurs de pixels d'une image précédente de la séquence ; et en retirant des artefacts de rémanence d'au moins certains pixels de l'image sur la base d'une estimation de la rémanence générée sur la base de l'estimation de rémanence et d'une ou plusieurs estimations précédentes de la rémanence desdits au moins certains pixels et d'un modèle de la décroissance exponentielle de la rémanence.

Selon un mode de réalisation, l'estimation de rémanence est une estimation de rémanence moyenne. Par exemple, l'estimation de rémanence moyenne correspondant à une estimation de rémanence moyenne instantanée pour chacun desdits au moins certains pixels.

Selon encore un autre aspect, on prévoit un dispositif de capture d'images infrarouges, comprenant : une matrice de microbolomètres ; et le dispositif de traitement d'image susmentionné.

Selon encore un autre aspect, on prévoit une caméra infrarouge comprenant le dispositif de capture d'images infrarouges susmentionné.

Brève description des dessins

Ces caractéristiques et avantages, ainsi que d'autres, seront exposés en détail dans la description suivante de modes de réalisation particuliers faite à titre illustratif et non limitatif en relation avec les figures jointes parmi lesquelles :

la figure 1 illustre schématiquement un dispositif de capture d'images IR selon un exemple de réalisation de la présente description ;

la figure 2 illustre schématiquement un circuit de traitement d'image de la figure 1 plus en détail selon un exemple de réalisation ;

la figure 3 représente une image comprenant un artefact de rémanence ;

la figure 4 est un graphique représentant une décroissance exponentielle de la rémanence d'un pixel ;

la figure 5 est un organigramme général illustrant des étapes dans un procédé de suppression de rémanence dans une image selon un exemple de réalisation de la présente description ;

la figure 6 est un graphique montrant un exemple de valeurs de pixels simulées d'un pixel x souffrant de rémanence sur une séquence de 300 images ;

la figure 7 est un graphique montrant un exemple de valeurs de pixels simulées sur l'étendue d'une matrice de microbolomètres avec une région de rémanence K ;

la figure 8 est un graphique montrant un autre exemple de valeurs de pixels simulées sur l'étendue d'une matrice de microbolomètres ;

la figure 9 est un graphique représentant une distribution de la différence entre des estimations de rémanence et des valeurs de rémanence moyenne ;

la figure 10 est un graphique représentant des valeurs d'estimations de la rémanence d'un pixel sur une séquence de n=1000 images consécutives et les valeurs de rémanence estimées en utilisant divers procédés ;

la figure 11 est un organigramme illustrant des étapes dans un procédé de réalisation d'un filtrage de Kalman pour produire des estimations de rémanence selon un exemple de réalisation de la présente description ; et

la figure 12 illustre la structure latente d'une série temporelle valide pour l'application d'un filtre de Kalman.

Description des modes de réalisation

De mêmes éléments ont été désignés par de mêmes références dans les différentes figures. En particulier, les éléments structurels et/ou fonctionnels communs aux différents modes de réalisation peuvent avoir les mêmes références et peuvent disposer de propriétés structurelles, dimensionnelles et matérielles identiques.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, sauf précision contraire, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence à l'orientation des figures ou à un microbolomètre orienté dans une position normale d'utilisation.

Sauf précision contraire, les expressions "environ", "approximativement", "sensiblement" et "de l'ordre de" signifient à 10 % près, et de préférence à 5 % près.

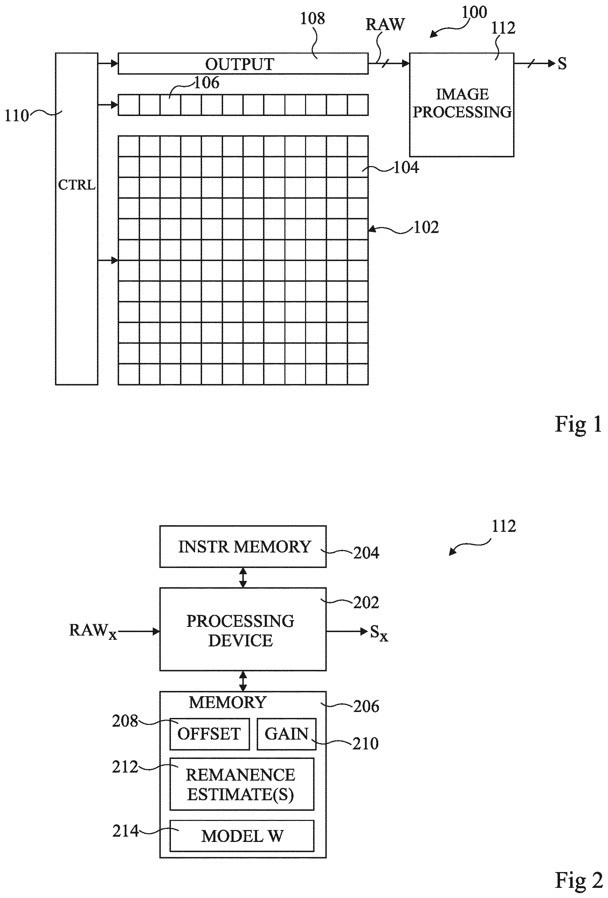

La figure 1 illustre un dispositif de capture d'images IR 100 comprenant une matrice de pixels 102 sensible à la lumière IR. Le dispositif de capture d'images IR 100 fait partie par exemple d'une caméra IR. Dans certains modes de réalisation, la matrice de pixels 102 est sensible à la lumière IR à ondes longues, comme la lumière ayant une longueur d'onde dans la plage de 7 à 16 $\mu$m ou plus.

Dans l'exemple de la figure 1, la matrice de pixels 102 comprend 144 pixels de microbolomètres 104 agencés sur 12 rangées et 12 colonnes. Dans des variantes de réalisation, la matrice de pixels 102 pourrait comprendre un nombre quelconque de rangées et de colonnes de pixels. Typiquement, la matrice de pixels 102 comprend par exemple 640 par 480, ou 1024 par 768 pixels de microbolomètres.

Dans l'exemple de la figure 1, chaque colonne de pixels de la matrice 102 est associée à une structure de référence 106 correspondante. Bien qu'elle ne soit pas fonctionnellement un élément d'image, cette structure sera appelée ici "pixel de référence" par analogie structurelle avec les pixels de microbolomètres de capture d'image (ou actifs) 104. En outre, un bloc de sortie (OUTPUT) 108 est couplé à chaque colonne de la matrice de pixels 102 et à chacun des pixels de référence 106, et fournit une image brute RAW comprenant les signaux ou lectures capturés par la matrice de pixels 102 conjointement avec les pixels de référence 106.

Un exemple de matrice de pixels du type bolomètre est par exemple décrit plus en détail dans le brevet des États-Unis d'Amérique US 7 700 919, cédé à la demanderesse, dont le contenu est incorporé ici en référence dans les limites autorisées par la loi.

Un circuit de commande (CTRL) 110 fournit par exemple des signaux de commande à la matrice de pixels 102, aux pixels de référence 106 et au bloc de sortie 108.

L'image brute RAW est par exemple fournie à un circuit de traitement d'image (IMAGE PROCESSING) 112, qui par exemple applique une correction d'image "2 points" aux pixels de l'image, et aussi une correction de rémanence, pour produire une image corrigée S.

Pendant une opération de lecture de la matrice de pixels 102, les rangées de pixels sont par exemple lues une seule à la fois.

La figure 2 illustre le circuit de traitement d'image 112 de la figure 1 plus en détail selon un exemple de réalisation.

Les fonctions du circuit de traitement d'image 112 sont par exemple mises en oeuvre par du logiciel, et le circuit de traitement d'image 112 comprend un dispositif de traitement (PROCESSING DEVICE) 202 comportant un ou plusieurs processeurs sous le contrôle d'instructions mémorisées dans une mémoire d'instructions (INSTR MEMORY) 204. Dans des variantes de réalisation, les fonctions du circuit de traitement d'image 112 pourraient être mises en oeuvre au moins partiellement par du matériel dédié. Dans un tel cas, le dispositif de traitement 202 comprend par exemple un ASIC (circuit intégré spécifique d'application), ou un FPGA (réseau de portes programmable sur site), et la mémoire d'instructions 204 peut être omise.

Le dispositif de traitement 202 reçoit l'image d'entrée brute RAW, et produit l'image corrigée S, qui est par exemple fournie à un afficheur (non illustré) du dispositif de capture d'images.

Le dispositif de traitement 202 est aussi couplé à une mémoire de données (MEMORY) 206 mémorisant par exemple des valeurs de décalage (OFFSET) 208 et des valeurs de gain (GAIN) 210 utilisées pour mettre en oeuvre la correction d'image "2 points".

Dans certains modes de réalisation, on réalise une correction d'image sans obturateur. Par exemple, les valeurs de décalage prennent la forme d'un vecteur $V_{COL}$ représentant une variation structurelle en colonne, et d'une matrice $OFF_{DISP}$ représentant une dispersion structurelle non en colonne 2D introduite par la matrice de pixels 102. La variation en colonne provient par exemple principalement de l'utilisation du pixel de référence 106 dans chaque colonne, alors que la rangée de pixels de référence de colonne n'est pas en général parfaitement uniforme. La dispersion non en colonne 2D provient par exemple principalement de différences locales physiques et/ou structurelles entre les bolomètres actifs de la matrice de pixels résultant par exemple d'une dispersion dans le procédé technologique de fabrication.

Un exemple de technique de correction d'image sans obturateur et, en particulier, de la génération du vecteur $V_{COL}$ et de la matrice $OFF_{DISP}$, et de la correction de valeurs de pixels sur la base de ce vecteur et de cette matrice, est décrit plus en détail dans la demande de brevet américain US 14/695539 déposée le 24 avril 2015, cédée à la demanderesse, dont le contenu est incorporé ici en référence dans les limites autorisées par la loi.

Dans des variantes de réalisation, différents types de correction d'image "2 points" pourraient être mis en oeuvre, y compris des solutions qui impliquent l'utilisation d'un obturateur.

La mémoire 206 mémorise aussi par exemple une ou plusieurs estimations de rémanence (REMANENCE ESTIMATE(S)) 212 calculées pour des pixels d'une ou plusieurs images capturées précédemment, comme on va le décrire plus en détail ci-après. Dans certains modes de réalisation, la mémoire 206 mémorise aussi un modèle W (MODEL W) représentant la décroissance de la rémanence, comme on va le décrire plus en détail ci-après.

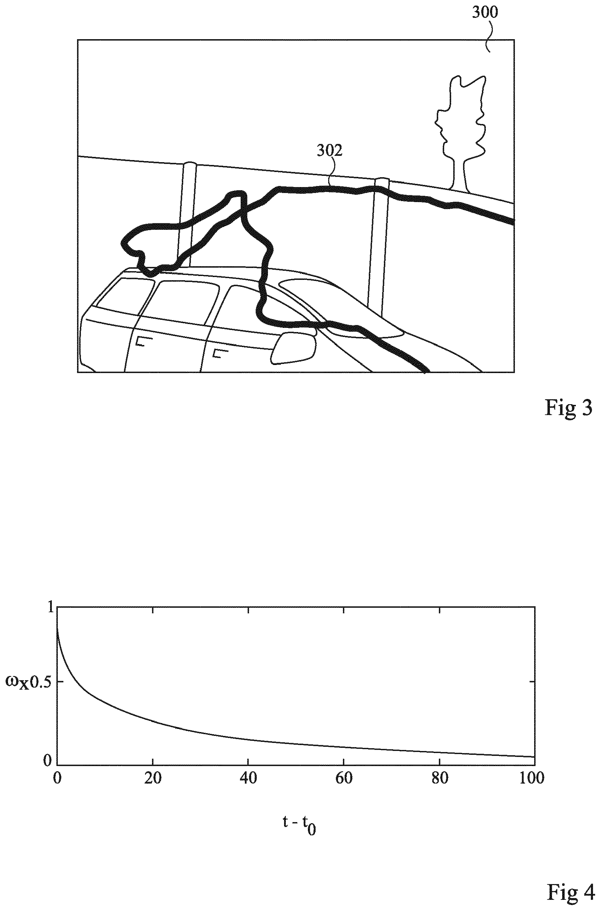

La figure 3 représente une image 300 dans laquelle se trouve un artefact de rémanence 302. Par exemple, cette image a été capturée par une matrice de bolomètres, et pendant que la matrice était active, un reflet, et en particulier un flux de chaleur relativement intense, a été reçu par la matrice. La résistance de la couche thermique de chaque pixel de la matrice de bolomètres devrait varier en fonction de la température, plus la température étant élevée, plus la résistance étant basse. Dans l'image 300, dans un but de lisibilité, les niveaux de gris ont été inversés : les températures élevées sont représentées par des pixels plus sombres. Le flux de chaleur relativement intense provoque une diminution significative et persistante de la résistance des pixels concernés, ce qui conduit à la traînée sombre 302 dans l'image 300 qui correspond au chemin du flux à travers la matrice de microbolomètres. Lorsqu'il résulte de la chaleur du soleil, un tel artefact est souvent appelé coup de soleil.

La figure 4 est un graphique représentant un exemple de la rémanence $\omega_x$ d'un pixel x d'une matrice de microbolomètres comme la matrice 102 de la figure 1, en fonction du temps, selon un exemple de réalisation. La rémanence $\omega_x$ présente une décroissance exponentielle qui peut être modélisée par l'équation suivante :

[Math 2]

où : $t_0$ est l'instant où le pixel revient à sa température normale après l'instant où le reflet frappe le pixel ;

x = (rangée, colonne) est le vecteur de coordonnées du pixel ;

$\alpha$, $\beta$ et $\tau$ sont des paramètres ; et :

[Math 3]

$$\mathbf{1}_{t>t_0} = \begin{cases} 1, & if\ t > t_0 \\ 0, & else \end{cases}$$

est la fonction caractéristique. Dans l'exemple de la figure 4, $\tau=10$, $\alpha=1$, et $\beta=0{,}5$.

La rémanence est une perturbation additive. Ainsi les valeurs de pixels $f_x(t)$ d'une image affectée de rémanence peuvent être modifiées ainsi :

[Math 4]

$$f_x(t) = \omega_x(t - t_0; \tau, \alpha, \beta) + G_{\omega_x}(t - t_0)S_x(t)$$

où $S_x(t)$ est l'image sans le reflet, $G_{\omega x}$ est la matrice de modification de gain en raison du reflet, et $f_x(t)$ correspond par exemple à une correction d'image "2 points" comme décrit précédemment. Un procédé pour réaliser une correction sur la base d'une matrice de variation de gain est décrit plus en détail dans le brevet français FR2987210, dont le contenu est incorporé ici en référence dans les limites autorisées par la loi. Toutefois, la variation de sensibilité des pixels représentée par le terme $G_{\omega x}(t-t_0)S_x(t)$ peut être considérée comme faible par rapport à $\omega_x$, et dans la suite, sa contribution sera ignorée en considérant que le terme $G_\omega$ est égal à 1.

Lorsqu'un dispositif de capture d'images IR, comme le dispositif 100 de la figure 1, est utilisé pour capturer une image IR, il y a plusieurs cas d'utilisation différents qui peuvent être distingués.

Une situation dynamique (appelée dans la suite Cas 1) peut être considérée, situation dans laquelle l'image dans le champ de vision de la matrice de pixels peut être considérée comme variable, puisque la caméra IR se déplace et/ou puisque la scène change. Pour ce type de situation dynamique, le modèle susmentionné est approprié puisque la rémanence $\omega_x(t)$ et l'image $S_x(t)$ varient toutes les deux dans le temps :

[Math 5]

$$f_x(t) = \omega_x(t) + S_x(t)$$

Une autre situation (appelée dans la suite Cas 2) correspond à un cas dans lequel l'image dans le champ de vision de la matrice de pixels est sensiblement constante. Ainsi, seule la rémanence varie dans le temps. Dans un tel cas, les valeurs de pixels $f_x(t)$ d'une image affectée de rémanence peuvent être modélisées ainsi :

[Math 6]

$$f_x(t) = \omega_x(t) + S_x$$

où l'image $S_x$ sans reflet peut être supposée constante.

À la fois dans le Cas 1 et dans le Cas 2, un flux d'images est par exemple capturé et mémorisé pour former un fichier vidéo et/ou est relayé pratiquement en temps réel vers un afficheur d'image de la caméra IR.

Une troisième situation (appelée dans la suite Cas 3) correspond à un cas où à la fois l'image dans le champ de vision de la caméra IR et la rémanence varient suffisamment lentement pour que toutes les deux puissent être considérées comme constantes dans le temps, en d'autres termes la décroissance dans le temps est si lente qu'elle ne peut pas être mesurée dans la trame temporelle de l'évaluation. Les valeurs de pixels $f_x$ de l'image dans ce cas peuvent être modélisées ainsi :

[Math 7]

$$f_x = \omega_x + S_x$$

On va maintenant décrire plus en détail des procédés pour retirer au moins partiellement des artefacts provoqués par la rémanence pour le Cas 1 et le Cas 2. Le Cas 3, qui est équivalent à une retouche d'image sur une seule image sans informations temporelles additionnelles concernant les informations de pixels perdues, ne sera pas traité dans la présente description.

Dans la suite, le temps est échantillonné en le représentant par t=n et t+$\delta$t=n+1. Par conséquent, la valeur d'une matrice **M** à l'instant t et au pixel x va être représentée par $\mathbf{M}_{n,x}$ au lieu de $\mathbf{M}(t,x)$ .

### Schéma général

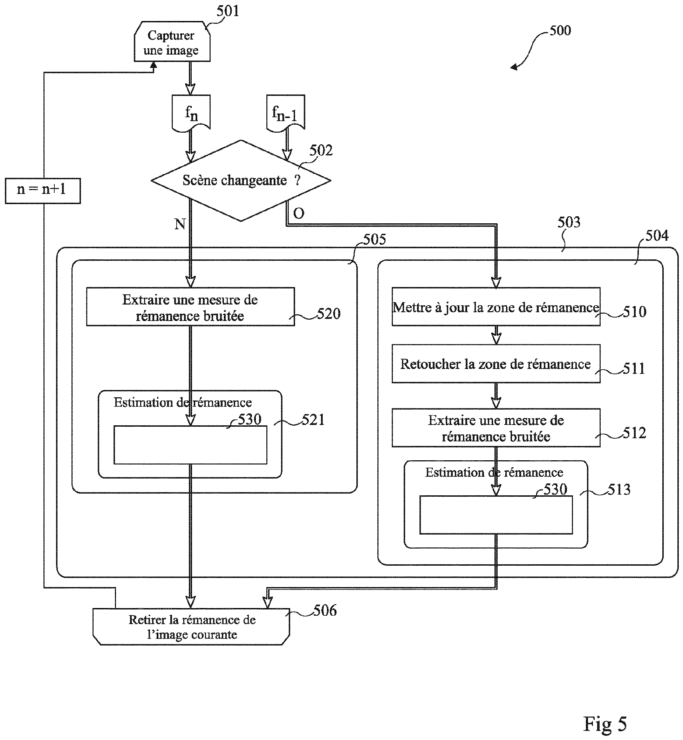

La figure 5 est un organigramme général illustrant des étapes d'un procédé 500 de correction de rémanence dans une séquence d'images selon un exemple de réalisation de la présente description. Ce procédé est par exemple mis en oeuvre par le circuit de traitement d'image 112 des figures 1 et 2. En variante, le procédé pourrait être mis en oeuvre par un autre type de dispositif de traitement qui peut ou non faire partie d'une caméra IR.

Capture d'image

Dans une étape 501, le procédé démarre lorsqu'une image $f_n$ est capturée. Cette image correspond par exemple à une image brute $RAW_n$ à laquelle une correction d'image a été appliquée, comme une correction d'image "2 points" décrite précédemment.

Détection de changement

Après l'étape 501, une étape 502 est par exemple mise en oeuvre dans laquelle la présence d'une scène changeante est détectée sur la base de l'image $f_n$ et d'une image capturée précédemment $f_{n-1}$. L'étape 502 est suivie d'un procédé d'estimation de rémanence 503 impliquant, par exemple, l'estimation d'une moyenne de rémanence

courante $\mu_{\omega,n,x}$ au niveau de chaque pixel x de l'image courante n. La détection d'une scène changeante dans l'étape 502 est utilisée pour sélectionner entre des variantes de procédé 504 et 505 pour réaliser l'étape d'estimation de rémanence 503. En particulier, si une scène changeante est détectée dans l'étape 502, dans le procédé d'estimation de rémanence 503 ultérieur, le procédé du Cas 1 est appliqué, correspondant au procédé 504 de la figure 5. Si, au contraire, une scène statique est détectée, dans le procédé d'estimation de rémanence 503 ultérieur, le procédé du Cas 2, correspondant au procédé 505 de la figure 5, est appliqué.

Par exemple, la dynamique de la scène peut être détectée dans l'étape 502 en comparant un changement temporel à un seuil qui est réglé pour être supérieur au niveau de bruit temporel, par exemple à deux ou trois fois que le niveau du bruit temporel. Une telle évaluation pourrait être réalisée globalement pour l'image, par exemple basée sur des changements temporels moyens, auquel cas tous les pixels de l'image sont par exemple traités selon le même procédé (le procédé 504 du Cas 1, ou le procédé 505 du Cas 2). En variante, l'évaluation locale pourrait être réalisée sur la base du changement temporel au niveau de pixels individuels ou de sous-régions individuelles de l'image, et une sélection entre l'application du procédé 504 du Cas 1 ou du procédé 505 du Cas 2 pourrait être faite pixel par pixel ou sous-région par sous-région.

Le procédé 504 est décrit plus en détail ci-après dans une sous-section intitulée Cas 1, et le procédé 505 est décrit plus en détail ci-après dans une sous-section intitulée Cas 2.

Alors que la figure 5 illustre un procédé impliquant l'exécution des deux procédés 504 et 505, la sélection entre ces procédés étant faite à chaque trame sur la base de la détection de changement de scène, dans des variantes de réalisation, seulement le procédé 504 ou seulement le procédé 505 pourrait être mis en oeuvre.

Correction de rémanence

Après l'étape 503, une étape 506 est par exemple mise en oeuvre, impliquant la correction de l'image sur la base de la rémanence estimée. Par exemple, l'image est corrigée en appliquant l'équation suivante pour chaque pixel x de l'image $f_n$ pour générer l'image $S_n$ :

[Math 8]

$$S_{n,x} = f_{n,x} - \mu_{\omega,n,x}$$

Après l'étape 506, n est incrémenté et les étapes 501 à 506 sont par exemple répétées à la suite de la capture de l'image suivante n.

**Cas 1**

Détection de zone de rémanence

Dans le Cas 1, le procédé 503 implique l'application du procédé 504 de la figure 5 impliquant des étapes 510 à 513.

Dans l'étape 510, une ou plusieurs zones de rémanence sont mises à jour.

Par exemple, un masque est généré pour chaque image $f_n$ indiquant les zones de rémanence. Ces zones peuvent être plus grandes que les zones effectives dans lesquelles les pixels sont impactés par la rémanence. Toutefois, dans certains modes de réalisation, les zones de rémanence correspondent à au plus 75 % des pixels de l'image. Le masque peut par exemple être généré en détectant des zones dans lesquelles les valeurs de pixels sont notablement supérieures à celles des régions environnantes, en poursuivant par exemple la trajectoire du soleil, bien que d'autres techniques, y compris des techniques basées sur une détection de bord, puissent aussi être utilisées.

Inpainting

Ensuite, dans l'étape 511, une méthode d'inpainting est appliquée à ces zones de rémanence dans l'image. La méthode d'inpainting est une technique de reconstruction d'image qui est connue dans la technique et qui implique la correction de valeurs de pixels dans la zone ciblée en fonction d'informations d'image provenant de l'extérieur de la zone ciblée. À titre d'exemple, une méthode d'inpainting est décrit plus en détail dans la publication de 2014 de C. Guillemot and O. Le Meur intitulée "Image inpainting: Overview and recent advances", IEEE signal processing magazine, 31(1), 127-144, dont le contenu est incorporé ici en référence dans les limites autorisées par la loi.

Mesure de rémanence

Dans l'étape 512, une mesure bruitée $\omega^*_{n,x}$ de la rémanence au niveau du pixel x dans l'image $f_n$ est extraite pour chaque pixel sur la base de l'image retouchée. Par exemple, cette mesure bruitée est calculée en réalisant la soustraction suivante pixel par pixel :

[Math 9]

$$\omega^*_{n,x} = f_{n,x} - S^*_{n,x}$$

où $S^*_{n,x}$ est l'image retouchée par la méthode d'inpainting de rang n au niveau du pixel x.

Estimation de rémanence

Dans l'étape 513, la rémanence est estimée en appliquant une opération d'estimation de rémanence 530. Par exemple, l'estimation de rémanence comprend l'estimation d'une rémanence moyenne instantanée $\mu_{\omega,n,x}$ pour chaque pixel x. Cela implique par exemple, pour chaque pixel x, la génération d'une estimation courante de la rémanence $\omega_{n,x}$ en tant que somme pondérée entre la mesure de rémanence courante $\omega^*_{n,x}$ et l'estimation de rémanence précédente $\omega_{n-1,x}$. Dans certains modes de réalisation, l'étape 530 implique la génération de l'estimation $\omega_{n,x}$ simplement comme la moyenne de la rémanence mesurée $\{\omega^*_{k,x}\}_{k=n-M:n}$ dans les m images précédentes. Dans des variantes de réalisation, l'étape 530 implique la génération de l'estimation $\omega_{n,x}$ sur la base d'un filtre de Kalman qui prend en compte un modèle de décroissance temporelle de la rémanence. Par exemple, le modèle exponentiel W peut être utilisé. En utilisant un filtre de Kalman, les estimateurs de $\omega_{n,x}$ sont par exemple sa moyenne $\mu_{\omega,n,x}$ et sa variance $\sigma^2_{\omega,n,x}$ qui le caractérisent entièrement.

Le procédé 504 permet de retirer la rémanence sur la base d'une observation faite par les présents inventeurs qui est que, lorsque l'image dans le champ de vision de la matrice de pixels change, la variation temporelle des valeurs de pixels peut être considérée comme du bruit ayant une distribution normale centrée sur $\mu_{\omega,n,x}$.

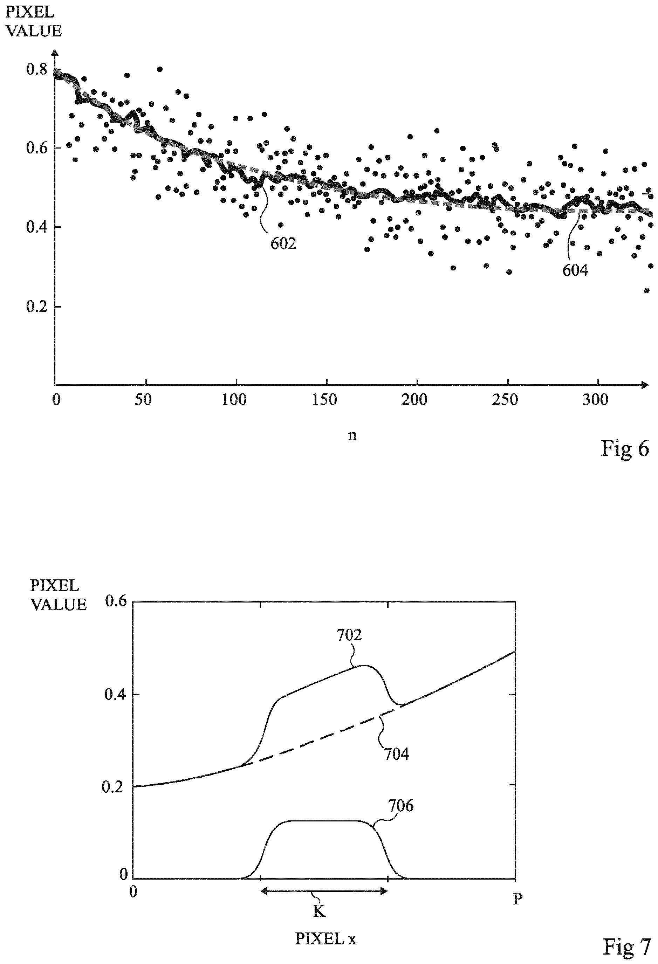

La figure 6 est un graphique représentant un exemple de valeurs de pixels simulées (PIXEL VALUE) d'un pixel x souffrant de rémanence sur une séquence de 300 images n capturées à une fréquence de capture d'images de, par exemple, 25 trames par seconde. Les points en figure 6 représentent les 300 valeurs de pixels, et une courbe continue 602 représente une moyenne de rémanence estimée dans le temps. Une courbe en trait interrompu 604 en figure 6 représente la rémanence vraie $\omega_x$, qui a une décroissance exponentielle. En obtenant une estimation raisonnablement précise de cette rémanence vraie $\omega_x$ pour une image donnée, elle peut être soustraite de la valeur de pixel afin de fournir les informations de pixels sous-jacentes représentant la scène d'image.

En effet, en considérant que l'image dans le champ de vision de la matrice de pixels est variable dans le temps, la scène peut être considérée comme étant du bruit stationnaire défini ainsi :

[Math 10]

$$S_{n,x} \sim N(\mu_S, \sigma^2_S)$$

où "~" signifie "est distribué selon" et $N(\mu,\sigma^2)$ est la distribution normale ayant une valeur moyenne $\mu$ et une variance $\sigma^2$, qui sont ici constantes dans le temps et dans l'espace.

La rémanence est toutefois du bruit non stationnaire puisqu'elle a une valeur moyenne qui décroît dans le temps.

[Math 11]

$$\omega_{n,x} \sim N(\mu_{\omega,n,x}, \sigma^2_\omega)$$

L'image observée au niveau du pixel x d'une image $f_n$ est ainsi la somme de deux variables aléatoires indépendantes :

[Math 12]

$$f_{n,x} = S_{n,x} + \omega_{n,x} \sim N(\mu_S + \mu_{\omega,n,x}, \sigma_S^2 + \sigma_\omega^2)$$

La figure 7 est un graphique illustrant des valeurs de pixels simulées (PIXEL VALUE) des pixels (PIXEL x) de 0 à P sur l'étendue de la matrice de microbolomètres, dans lequel on a supposé que des pixels se trouvant dans une zone K sont sur le chemin d'un coup de soleil.

La figure 7 représente, par une courbe en trait continu 702, un exemple de l'image observée $f_{n,x}$, qui est la somme de la moyenne de la scène d'image $\mu_{s,n}$, représentée par une courbe en trait interrompu 704 et de la rémanence moyenne $\mu_{\omega,n,x}$ représentée par une courbe en trait continu 706. Par conséquent, en estimant la moyenne de la scène d'image $\mu_{S,n,x}$, il est possible d'obtenir $\mu_{\omega,n,x}$ en calculant :

[Math 13]

$$\mu_{\omega,n,x} = f_{n,x} - \mu_{S,n,x}$$

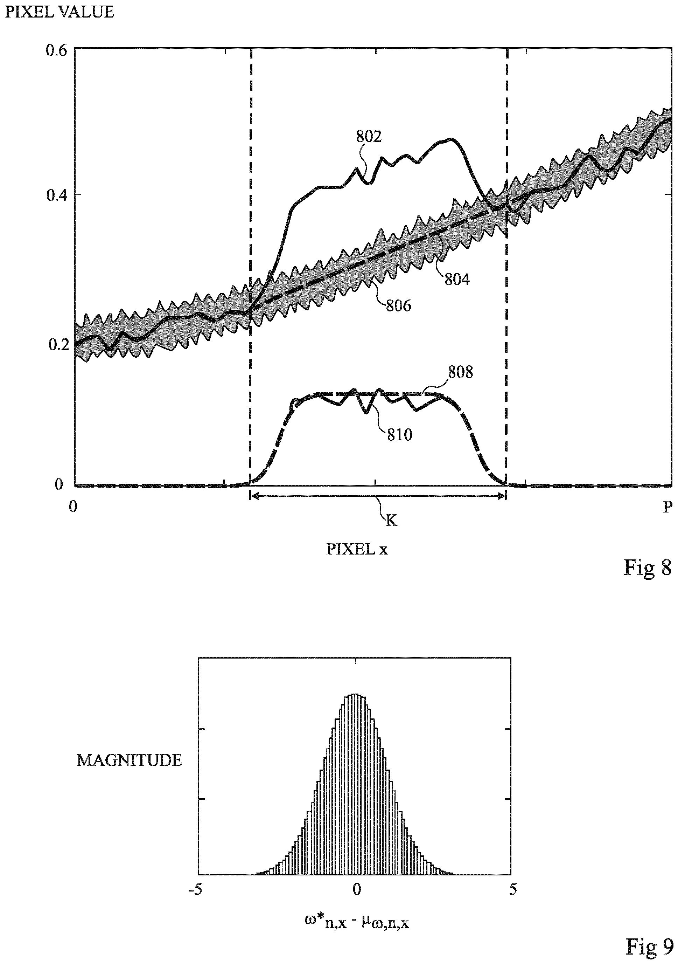

Dans l'étape 513 du procédé 504 de la figure 5, les présents inventeurs proposent d'obtenir l'estimation de la moyenne de la scène d'image $\mu_{S,n}$ en utilisant la méthode d'inpainting, qui va maintenant être décrite plus en détail en faisant référence à la figure 8.

La figure 8 est un graphique illustrant des valeurs de pixels (PIXEL VALUE) des pixels (PIXEL x) de 0 à P sur l'étendue de la matrice de microbolomètres, dans lequel on suppose que, similairement à l'exemple de la figure 7, les pixels se trouvant dans une zone K sont sur le chemin d'un coup de soleil.

Une courbe en trait continu 802 en figure 8 représente une ligne de l'image observée $f_n$, et une courbe en trait interrompu 804 représente cette ligne retouchée par la méthode d'inpainting, notée $S^*_n$, qui peut être exprimée de la manière suivante :

[Math 14]

$$S^*_n = \text{Inpaint}(f_{K,n} | f_{\overline{K},n})$$

où K_bar est la zone à l'extérieur de la zone de coup de soleil K. En d'autres termes, des informations de pixels provenant de la zone extérieure à la zone de coup de soleil sont utilisées pour retoucher, par la méthode d'inpainting, la zone K.

Les courbes 806 en figure 8 représentent des échantillons successifs de S. Elles montrent que la courbe de retouche par la méthode d'inpainting 804 n'est pas biaisée :

[Math 15]

$$E[S^*] = \mu_S$$

où E[] est la valeur attendue.

Une courbe en trait interrompu 808 représente la rémanence $\omega_n$, et une courbe en trait continu 810 représente le résultat de la soustraction $f_n - S^*_n$.

On peut supposer que la portion retouchée, par la méthode d'inpainting, de l'image fournit une estimation non biaisée de la moyenne de la scène d'image $\mu_S$ :

[Math 16]

$$S^*_n \sim N(\mu_S, \sigma_S^2)$$

et ainsi une mesure non biaisée de $\mu_{\omega,n,x}$ :

[Math 17]

$$\omega_{n,x}^* = f_{n,x} - S_{n,x}^* \sim N(\mu_{\omega,n,x}, \sigma_S^2 + \sigma_\omega^2)$$

La figure 9 est un graphique représentant la distribution de l'amplitude (MAGNITUDE) de la différence entre la mesure $\omega_{n,x}^*$ de la rémanence et la rémanence moyenne $\mu_{\omega,n,x}$, qui correspond à la distribution normale. En effet, à chaque instant, la mesure de $\omega_n^*$ correspondant à :

[Math 18]

$$\omega_n^* = f_n - S_n^*$$

fournit une mesure bruitée non biaisée de la valeur attendue $E[\omega_{n,x}^*] = \mu_{\omega,n,x}$ de la rémanence.

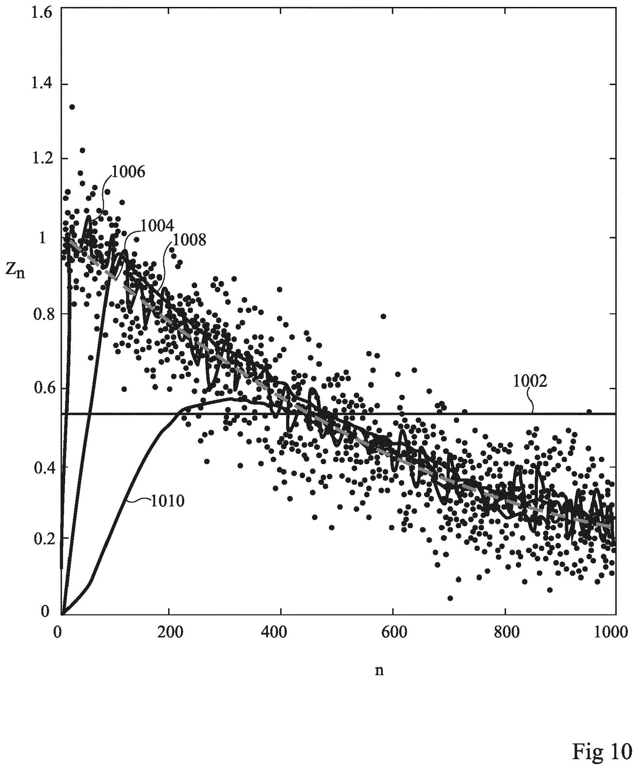

Puisque cette valeur varie avec le temps, les présents inventeurs proposent d'estimer cette valeur pour chaque nouvelle image $f_n$ sur la base d'une somme pondérée entre la mesure courante $\omega_n^*$ et l'estimation précédente $\mu_{\omega,n-1}$, comme on va le décrire maintenant plus en détail en faisant référence à la figure 10.

La figure 10 est un graphique représentant des valeurs $z_n$ des estimations de la rémanence d'un pixel x sur une séquence de n=1000 trames consécutives. Chaque courbe en trait continu correspond à un procédé d'estimation différent, dans l'opération 530 de la figure 5, de la valeur $\mu_{\omega,n,x}$. Les points correspondent aux mesures de la rémanence brute $\omega_{n,x}^*$. Une ligne 1002 représente la moyenne de ces mesures de rémanence brute $\omega_{n,x}^*$, qui peut être exprimée de la façon suivante :

[Math 19]

$$\mu_{\omega,n} = \frac{1}{n} \sum\nolimits_{k=1}^{n} \omega_k^*$$

Une courbe en trait interrompu 1004 en figure 10 représente la décroissance vraie de la rémanence du pixel x.

Une courbe en trait continu 1006 en figure 10 représente une moyenne mobile basée sur une fenêtre de 10 images, qui peut être exprimée par :

[Math 20]

$$\mu_{\omega,n} = \frac{1}{10} \sum\nolimits_{k=n-10}^{n} \omega_k^*$$

La courbe 1006 assure une convergence rapide, mais est relativement bruitée.

Une courbe 1008 en figure 10 représente une moyenne mobile basée sur une fenêtre de 100 images, qui peut être exprimée par :

[Math 21]

$$\mu_{\omega,n} = \frac{1}{100} \sum\nolimits_{k=n-100}^{n} \omega_k^*$$

La courbe 1008 assure encore une convergence relativement rapide, et est moins bruitée que la courbe 1006. Toutefois cette courbe est biaisée, et un tel biais risque d'être visible dans l'image corrigée finale.

Dans certains modes de réalisation, afin d'obtenir un compromis raisonnable entre vitesse de convergence et bruit, on pourrait utiliser une moyenne mobile basée sur une fenêtre glissante de m images, avec m compris entre 20 et 150 et par exemple compris entre 20 et 80. Dans certains modes de réalisation, le nombre m d'images est variable dans le temps, par exemple augmentant dans le temps au fur et à mesure que la séquence d'images progresse. Dans certains modes de réalisation, il peut y avoir des inconvénients avec cette approche basée sur une fenêtre glissante, si par exemple le résultat est encore biaisé dans une certaine mesure, et s'il y a besoin d'étalonner la taille de la fenêtre glissante.

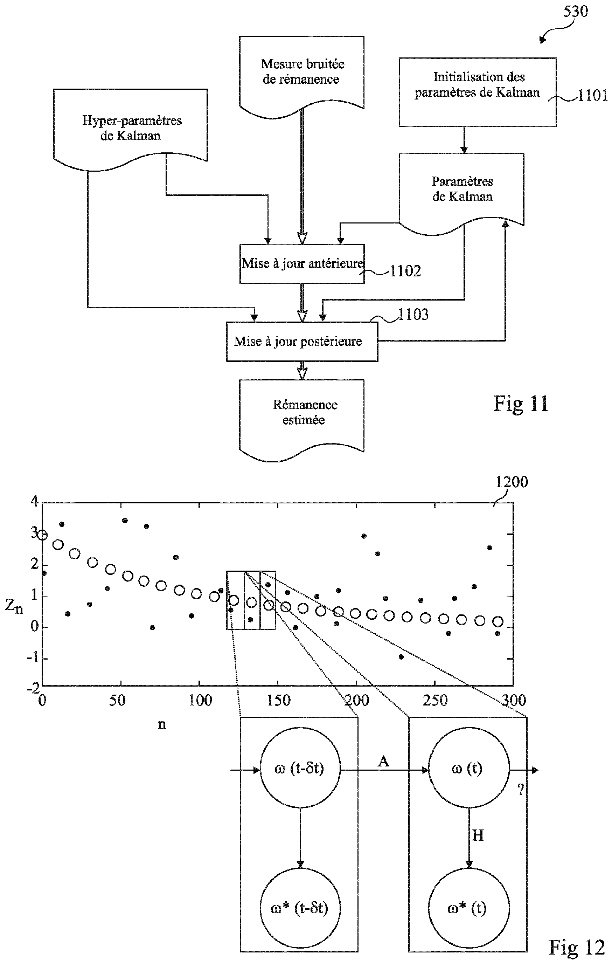

Une courbe 1010 en figure 10 correspond à l'application d'un filtre de Kalman, qui a une convergence relativement lente par rapport à la moyenne mobile, mais qui converge avec une précision relativement élevée vers la décroissance vraie de la rémanence représentée par la courbe 1004. Le filtre de Kalman prend en compte des mesures de la rémanence pour une pluralité d'images dans la séquence, et aussi le modèle W de la décroissance exponentielle de la rémanence. On va maintenant décrire plus en détail l'utilisation d'un filtre de Kalman dans l'étape 530 en faisant référence aux figures 11 et 12.

Filtrage de Kalman

La figure 11 est un organigramme illustrant des étapes dans un procédé d'estimation de la valeur de rémanence moyenne $\mu_{\omega,n,x}$ en utilisant un filtre de Kalman dans l'étape 513 de la figure 5. Ce procédé est par exemple mis en oeuvre par le circuit de traitement d'image 112 des figures 1 et 2. En variante, le procédé pourrait être mis en oeuvre par un autre type de dispositif de traitement qui peut ou non faire partie d'une caméra IR.

Les filtres de Kalman sont bien adaptés à l'estimation d'un vecteur d'état latent (caché) $\omega_n$ à chaque étape n d'une série temporelle dynamique gaussienne linéaire en utilisant une mesure bruitée (observée) $\omega_n^*$ et en connaissant certains hyper-paramètres. De telles séries temporelles sont une sorte de chaîne de Markov et peuvent être entièrement décrites par la séquence simple suivante :

[Math 22]

$$\boldsymbol{\omega_n = A\omega_{n-1} + v,}$$
$$\boldsymbol{\omega_n^* = H\omega_n + \eta,}$$
$$\boldsymbol{\omega_0 = \mu_{\omega,0} + u,}$$

où **A** est la matrice de transition, **H** est la matrice de mesure, et les paramètres **v, u** et $\eta$ sont des bruits additifs normaux à moyenne nulle de matrices de covariance $\Gamma$, $\Sigma_{\omega,\mathbf{0}}$ et **R** respectivement.

La figure 12 illustre un exemple d'une telle série temporelle, dans lequel le vecteur d'état caché (de dimension 1 dans cet exemple) est constitué des cercles et les mesures observées sont les points. Les entrées prises à un instant $(t-\delta t)$ sont les estimations corrigées précédentes de la rémanence $\omega(t-\delta t)$, et la matrice de transition A reliant l'estimation précédente à l'instant $(t-\delta t)$ à la nouvelle estimation à l'instant t. Puisque tout est gaussien dans la série temporelle, le vecteur d'état est entièrement caractérisé par son vecteur moyen $\mu_\omega$ et la matrice de covariance $\Sigma_\omega$, qui sont les valeurs inconnues à déterminer.

À chaque étape n, il a été démontré [Murphy, Machine Learning, a probabilistic perspective, 2012 p.638] qu'en connaissant les hyper-paramètres (constants dans le temps) $\Gamma$, **R, U, A, H** et $\mu_0$, l'état latent $\omega_n$ peut être estimé en utilisant les équations suivantes :

[Math 23]

$$\boldsymbol{\mu_{\omega,n,x}^- = A\omega_{n-1,x},}$$
$$\boldsymbol{\Sigma_{\omega,n,x}^- = A\Sigma_{\omega,n-1,x}A^T + \Gamma,}$$
$$\boldsymbol{\mu_{\omega,n,x} = \mu_{\omega,n,x}^- + K_{n,x}\big(\omega_{n,x}^* - H\mu_{\omega,n,x}^-\big),}$$
$$\boldsymbol{\Sigma_{\omega,n,x} = \big(I - K_{n,x}H\big)\Sigma_{\omega,n,x}^-,}$$

où :

[Math 24]

$$\boldsymbol{K_{n,x} = \Sigma_{\omega,n,x}^- H^T\big(H\Sigma_{\omega,n,x}^- H^T + R\big)^{-1}}$$

est le gain de Kalman et **I** est la matrice identité.

En d'autres termes, à chaque étape n, une nouvelle estimation a priori ($\mu_{\omega,n,x}$, $\Sigma_{\omega,\mathbf{n,x}}$) est estimée à partir d'une mesure $\omega_n^*$ et d'une estimation a priori ($\mu_{\omega,n,x}^-, \Sigma_{\omega,\mathbf{n,x}}^-$)**.**

Application au filtrage de rémanence

Matrices de covariance

Dans la présente description, la variable cachée $\omega$ est la rémanence au niveau de chaque pixel et est un scalaire. Par conséquent les matrices de covariance $\Gamma$, $R$, $\Sigma_{\omega,0}$, $\Sigma_{\omega}$ sont seulement des variances désignées respectivement $\gamma$, r, $\sigma_{\omega,0}^2$, $\sigma_{\omega}^2$.

Matrice de transition **A**

Dans la présente description, l'état caché est scalaire et la matrice de transition **A** est aussi un scalaire noté **a** et est directement reliée au modèle W de la rémanence. Comme cela est décrit en relation avec la figure 4 précédente :

[Math 25]

$$W = \omega(t) = \alpha e^{-\left(\frac{t-t_0}{\tau}\right)^{\beta}} 1_{t>t_0}$$

[Math 26]

$$\frac{\delta\omega(t)}{\delta t} = -\frac{\beta}{\tau}\left(\frac{t-t_0}{\tau}\right)^{\beta-1} \omega(t)$$

Dans le présent exemple, le paramètre $\beta$ est supposé égal à 1, conduisant pour $\omega(t+\delta t)$ au modèle suivant :

[Math 27]

$$\omega(t + \delta t) = a\omega(t), \qquad avec \; a = 1 - \frac{\delta t}{\tau}$$

La matrice de transition **a** est par exemple commune pour tous les pixels de la matrice. En variante, une matrice de transition différente $a_x$ pourrait être mémorisée pour chaque pixel.

Matrice de mesure H

Comme cela a été décrit précédemment, la mesure $\omega_n{}^*$ est aussi une valeur scalaire réelle qui est directement reliée à l'état caché en utilisant la matrice de mesure H :

[Math 28]

$$\omega_{n,x}^{*} = H\omega_{n,x} + \eta, avec \; H = 1$$

Initialisation

Dans une étape 1101 du procédé 530 de la figure 11, les paramètres de Kalman sont initialisés en initialisant l'état caché du filtre de Kalman. Par exemple, des valeurs initiales de moyenne $\mu_{\omega,0}$ et de variance $\sigma_{\omega,0}^2$ peuvent être initialisées pour tous les pixels x de la manière suivante :

[Math 29]

$$\mu_{\omega,0,x} = 0, \forall x$$

et

[Math 30]

$$\sigma^2_{\omega,0,\mathrm{x}} = 999, \forall x$$

Estimation *a priori*

Dans une étape 1102, une nouvelle estimation *a priori* est générée pour la rémanence moyenne sur la base de la mesure bruitée de rémanence, et des paramètres de Kalman et des hyper-paramètres de Kalman. Par exemple, la nouvelle estimation *a priori* est générée pour la rémanence moyenne à un instant n+1 :

[Math 31]

$$\mu^-_{\omega,n,x} = a\mu_{\omega,n-1,x}$$
$$\sigma^{\ -}_{\omega,n,x}{}^2 = a^2\sigma^2_{\omega,n-1,x} + \gamma$$

où $\gamma$ est la variance du modèle, et est par exemple définie par l'utilisateur.

Estimation *a posteriori*

Dans une étape 1103, les nouvelles valeurs de moyenne et de variance précédentes de la rémanence sont corrigées sur la base des paramètres de Kalman, des hyper-paramètres de Kalman et de la valeur de rémanence mesurée courante $\omega_{n,x}{}^*$, déterminée sur la base de l'image retouchée par la méthode d'inpainting :

[Math 32]

$$\mu_{\ \omega,n,x} = (1 - K_{n,x})\mu^-_{\omega,n,x} + K_{n,x}\omega^*_{n,x}$$
$$\sigma^{\ 2}_{\omega,n,x} = \left(1 - K_{n,x}\right)\sigma^{\ -}_{\omega,n,x}{}^2$$

où :

[Math 33]

$$K_{n,x} = \sigma^{\ -}_{\omega,n,x}{}^2\left(\sigma^{\ -}_{\omega,n,x}{}^2 + r\right)^{-1}$$

est le gain de Kalman.

En d'autres termes, une estimation *a posteriori* de la rémanence est générée comme étant le solde entre l'estimation précédente et la mesure, et le solde est ajusté par le gain de Kalman K.

Sequence

En référence de nouveau à la figure 11, après l'étape 1103, les paramètres de Kalman sont par exemple mis à jour. Comme cela est représenté en figure 5, le procédé 530 peut ensuite être répété pour l'image suivante n+1, ce qui implique la répétition des étapes 1102 et 1103 sur la base des paramètres de Kalman mis à jour. En effet, l'étape d'initialisation de paramètres 1101 est par exemple réalisée seulement sur une première itération du procédé de la figure 5.

**Cas 2**

Dans le Cas 2, l'étape 503 de la figure 5 implique le procédé 505 correspondant à un procédé de correction de rémanence dans une séquence d'images selon un autre exemple de réalisation de la présente description. Ce procédé est par exemple mis en oeuvre par le circuit de traitement d'image 112 des figures 1 et 2. En variante, le procédé pourrait être mis en oeuvre par un autre type de dispositif de traitement qui peut ou non faire partie d'une caméra IR.

Le procédé 505 implique des étapes 520 et 521.

Dans l'étape 520, une mesure de la rémanence dans l'image $f_n$ est calculée pour chaque pixel sur la base d'une image précédente $f_{n-1}$. Par exemple, une mesure $\omega^*_{n,x}$ de la rémanence est calculée pour chaque pixel x de l'image en réalisant la soustraction suivante :

[Math 34]

$$\omega *_{n,x} = f_{n,x} - f_{n-1,x}$$

Dans l'étape 521, la rémanence $\omega_{n,x}$ de chaque pixel est estimée sur la base de la mesure de rémanence et du modèle de décroissance exponentielle W. Par exemple, l'estimation de rémanence comprend l'estimation d'une rémanence moyenne instantanée $\mu_{\omega,n,x}$ pour chaque pixel x. Dans certains modes de réalisation, la moyenne de la rémanence $\mu_{\omega,n,x}$ et sa variance $\sigma^2_{\omega,n,x}$ sont estimées en utilisant un filtre de Kalman comme décrit précédemment en relation avec la figure 11. Toutefois, dans le cas d'une scène statique, la mesure $\omega^*$ est très bruitée et par conséquent, pour le Cas 2, la matrice de transition **a** devrait en général être plus précise que dans le Cas 1. Par conséquent, dans certains modes de réalisation, une matrice de transition locale $a_x = 1 - \delta t / \tau_x$ de décroissance exponentielle de la rémanence est mémorisée dans la mémoire 206 pour chaque pixel x. Ces matrices de transition sont par exemple estimées pendant une opération de prétraitement, impliquant, par exemple, une régression de la décroissance exponentielle sur deux ou plusieurs des premières trames juste à la suite de l'occurrence de la rémanence pour l'estimation de $\tau_x$. En outre, dans le Cas 2, la matrice de transition est :

[Math 35]

$$H_x = 1 - \exp\left(\frac{\delta t}{\tau_x}\right)$$

Un avantage des modes de réalisation décrits ici est que la rémanence peut être corrigée dans des séquences d'images pour le cas d'un d'une scène changeante (Cas 1) ou d'une scène statique (Cas 2), d'une manière relativement simple et efficace.

Divers modes de réalisation et diverses variantes ont été décrits. L'homme de l'art comprendra que certains éléments de ces modes de réalisation peuvent être combinés et d'autres variantes apparaîtront facilement à l'homme de l'art. Par exemple, il apparaîtra clairement à l'homme de l'art que le choix entre la fourniture d'un modèle de décroissance exponentielle commun W pour tous les pixels, ou de modèles différents pour chaque pixel x, dépendra de la précision requise et des caractéristiques de la matrice de pixels IR.

## Revendications

1. Procédé pour retirer, par un dispositif de traitement d'image (112), des artefacts de rémanence d'une image ($f_n$) d'une séquence d'images capturée par un dispositif de capture d'images infrarouges, le procédé comprenant :

   - retoucher par une méthode d'inpainting une zone de rémanence (K) dans l'image ($f_n$) pour générer une image retouchée ;
   - générer une mesure de rémanence ($\omega^*_{n,x}$) pour au moins certains pixels dans l'image ($f_n$) sur la base de l'image retouchée ; et
   - retirer des artefacts de rémanence d'au moins certains pixels de l'image ($f_n$) sur la base d'une estimation de rémanence ($\mu_{\omega,n,x}$) pour chacun desdits au moins certains pixels, chaque estimation de rémanence ($\mu_{\omega,n,x}$) étant générée sur la base des mesures de rémanence ($\omega^*_{n,x}$) d'une pluralité des images dans la séquence.

2. Procédé selon la revendication 1, dans lequel l'estimation de rémanence est une estimation de rémanence moyenne ($\mu_{\omega,n,x}$) correspondant à une estimation de rémanence moyenne instantanée pour chacun desdits au moins certains pixels.

3. Procédé selon la revendication 1 ou 2, dans lequel la génération de la mesure de rémanence ($\omega^*_{n,x}$) pour au moins certains pixels dans l'image ($f_n$) comprend une soustraction, à partir de chaque valeur de pixel desdits au moins certains pixels de l'image ($f_n$), d'une valeur de pixel d'un pixel correspondant dans l'image retouchée.

4. Procédé selon l'une quelconque des revendications 1 à 3, comprenant en outre une détection de la zone de rémanence (K) dans l'image ($f_n$).

5. Procédé selon la revendication 4, dans lequel la zone de rémanence (K) comprend moins de 75 % de pixels de l'image.

6. Procédé selon l'une quelconque des revendications 1 à 5, comprenant en outre le calcul de l'estimation de rémanence ($\mu_{\omega,n,x}$) pour chacun desdits au moins certains pixels :

   - en calculant une moyenne mobile des mesures de rémanence ($\omega^*_{n,x}$) de l'image ($f_n$) et d'au moins une image précédente dans la séquence.

7. Procédé selon la revendication 6, dans lequel la moyenne mobile est basée sur une fenêtre glissante de m images dans la séquence, m étant compris entre 20 et 150.

8. Procédé selon l'une quelconque des revendications 1 à 5, comprenant en outre un calcul de l'estimation de rémanence ($\mu_{\omega,n,x}$) pour chacun desdits au moins certains pixels en appliquant un filtrage de Kalman.

9. Procédé selon la revendication 8, dans lequel le calcul de l'estimation de rémanence ($\mu_{\omega,n,x}$) en appliquant un filtrage de Kalman comprend :

   - estimer *a priori* la rémanence de chacun desdits au moins certains pixels de l'image ($f_n$) sur la base d'une estimation de rémanence corrigée précédente de chacun desdits au moins certains pixels et d'un modèle (W) de la décroissance exponentielle de la rémanence ; et
   - corriger, pour chacun desdits au moins certains pixels de l'image ($f_n$), la rémanence estimée sur la base de la mesure de rémanence correspondante ($\omega^*_{n,x}$) pour obtenir une estimation *a posteriori* ($\mu_{\omega,n,x}$).

10. Procédé selon l'une quelconque des revendications 1 à 9, comprenant en outre une détection que la séquence d'images correspond à une scène changeante avant de retirer les artefacts de rémanence de l'image ($f_n$).

11. Support de stockage non transitoire mémorisant des instructions d'ordinateur qui, lorsqu'elles sont exécutées par un processeur d'un dispositif de traitement d'image (112), amènent la mise en oeuvre du procédé de l'une quelconque des revendications 1 à 10.

12. Dispositif de traitement d'image comprenant :

   au moins une mémoire (206) mémorisant une image ($f_n$) d'une séquence d'images capturée par un dispositif de capture d'images infrarouges et une ou plusieurs mesures de rémanence ($\omega^*_{n,x}$) d'au moins une image précédente dans la séquence ; et
   un ou plusieurs processeurs (202) agencés pour retirer des artefacts de rémanence de l'image ($f_n$) :

   - en retouchant, par une méthode d'inpainting, une zone de rémanence (K) dans l'image ($f_n$) pour générer une image retouchée ;
   - en générant une mesure de rémanence ($\omega^*_{n,x}$) pour au moins certains pixels dans l'image ($f_n$) sur la base de l'image retouchée ; et
   - en retirant des artefacts de rémanence d'au moins certains pixels de l'image ($f_n$) sur la base d'une estimation de rémanence ($\mu_{\omega,n,x}$) pour chacun desdits au moins certains pixels, chaque estimation de rémanence ($\mu_{\omega,n,x}$) étant générée sur la base des mesures de rémanence ($\omega^*_{n,x}$) d'une pluralité des images dans la séquence.

13. Dispositif de traitement d'image selon la revendication 12, dans lequel l'estimation de rémanence est une estimation de rémanence moyenne ($\mu_{\omega,n,x}$) correspondant à une estimation de rémanence moyenne instantanée pour chacun desdits au moins certains pixels.

14. Dispositif de capture d'images infrarouges, comprenant :

   - une matrice de microbolomètres (102) ; et
   - le dispositif de traitement d'image (112) de la revendication 12 ou 13.

15. Caméra infrarouge comprenant le dispositif de capture d'images infrarouges de la revendication 14.

**Patentansprüche**

1. Verfahren zum Entfernen durch eine Bildverarbeitungsvorrichtung (112) von Remanenzartefakten aus einem Bild ($f_n$) aus einer Folge von Bildern, die durch eine Infrarot-Bildgebungsvorrichtung aufgenommen wurden, wobei das Verfahren Folgendes aufweist:

   - Retouchieren einer Remanenzzone (K) in dem Bild ($f_n$), um ein retouchiertes Bild zu erzeugen;
   - Generieren eines Remanenzmaßes ($\omega^*_{n,x}$) für wenigstens einige Pixel in dem Bild ($f_n$), basierend auf dem retouchierten Bild; und
   - Entfernen von Remanenzartefakten von wenigstens einigen Pixeln des Bildes ($f_n$) basierend auf einer Remanenzabschätzung ($\mu_{\omega,n,x}$) für jedes der wenigstens einigen Pixel, wobei jede Remanenzabschätzung ($\mu_{\omega,n,x}$) generiert wird basierend auf den Remanenzmaßen ($\omega^*_{n,x}$) einer Vielzahl der Bilder in der Folge.

2. Verfahren nach Anspruch 1, wobei die Remanenzabschätzung eine mittlere Remanenzabschätzung ($\mu_{\omega,n,x}$) ist, die einer Schätzung einer momentanen mittleren Remanenz für jedes der wenigstens einigen Pixel entspricht.

3. Verfahren nach Anspruch 1 oder 2, wobei Generieren des Remanenzmaßes ($\omega^*_{n,x}$) für wenigstens einige Pixel in dem Bild ($f_n$) Subtrahieren, von jedem Pixelwert der wenigstens einigen Pixel des Bildes ($f_n$), eines Pixelwertes eines entsprechenden Pixels in dem retouchierten Bild aufweist.

4. Verfahren nach einem der Ansprüche 1 bis 3, das ferner Detektieren der Remanenzzone (K) in dem Bild ($f_n$) aufweist.

5. Verfahren nach Anspruch 4, wobei die Remanenzzone (K) weniger als 75 % der Pixel des Bildes aufweist.

6. Verfahren nach einem der Ansprüche 1 bis 5, das ferner Folgendes aufweist: Berechnen der Remanenzabschätzung ($\mu_{\omega,n,x}$) für jedes der wenigstens einigen Pixel durch:

   - Berechnen eines gleitenden Mittelwerts der Remanenzmaße ($\omega^*_{n,x}$) des Bildes ($f_n$) und mindestens eines vorherigen Bildes in der Folge.

7. Verfahren nach Anspruch 6, wobei der gleitende Mittelwert auf einem gleitenden Fenster von m Bildern in der Folge basiert, wobei m gleich zwischen 20 und 150 ist.

8. Verfahren nach einem der Ansprüche 1 bis 5, das ferner Folgendes aufweist: Berechnen der Remanenzabschätzung ($\mu_{\omega,n,x}$) für jedes der wenigstens einigen Pixel durch Anwenden von Kalman-Filterung.

9. Verfahren nach Anspruch 8, wobei Berechnen der Remanenzabschätzung ($\mu_{\omega,n,x}$) durch Anwenden der Kalman-Filterung Folgendes aufweist:

   - Schätzen a priori der Remanenz jedes der wenigstens einigen Pixel des Bildes ($f_n$) basierend auf einer vorherigen korrigierten Remanenzabschätzung jedes der wenigstens einigen Pixel und auf dem Modell (W) des exponentiellen Zerfalls der Remanenz; und
   - Korrigieren, für jedes der wenigstens einigen Pixel des Bildes ($f_n$), der geschätzten Remanenz basierend auf dem entsprechenden Remanenzmaß ($\omega^*_{n,x}$), um eine a-posteriori-Schätzung ($\mu_{\omega,n,x}$) zu erhalten.

10. Verfahren nach einem der Ansprüche 1 bis 9, das ferner Folgendes aufweist: Detektieren, dass die Bildfolge einer sich verändernden Szene entspricht, bevor die Remanenzartefakte aus dem Bild ($f_n$) entfernt werden.

11. Ein nicht-flüchtiges Speichermedium, das Computeranweisungen speichert, die, wenn sie von einem Prozessor einer Bildverarbeitungsvorrichtung (112) ausgeführt werden, das Verfahren nach einem der Ansprüche 1 bis 10 implementieren.

12. Eine Bildverarbeitungsvorrichtung, die Folgendes aufweist:

   wenigstens einen Speicher (206), der ein Bild ($f_n$) einer Folge von Bildern, die von einer Infrarot-Bildgebungsvorrichtung aufgenommen wurden, und ein oder mehrere Remanenzmaße ($\omega^*_{n,x}$) von wenigstens einem vorhergehenden Bild in der Folge speichert; und
   einen oder mehrere Prozessoren (202), eingerichtet zum Entfernen von Remanenzartefakten aus dem Bild ($f_n$)

durch:

- Retouchieren einer Remanenzzone (K) in dem Bild ($f_n$), um ein retouchiertes Bild zu erzeugen;
- Generieren eines Remanenzmaßes ($\omega^*_{n,x}$) für wenigstens einige Pixel in dem Bild ($f_n$), basierend auf dem retouchierten Bild; und
- Entfernen von Remanenzartefakten von wenigstens einigen Pixeln des Bildes ($f_n$) basierend auf einer Remanenzabschätzung ($\mu_{\omega,n,x}$) für jedes der wenigstens einigen Pixel, wobei jede Remanenzabschätzung ($\mu_{\omega,n,x}$) generiert wird basierend auf den Remanenzmaßen ($\omega^*_{n,x}$) einer Vielzahl der Bilder in der Folge.

13. Bildverarbeitungsvorrichtung nach Anspruch 12, wobei die Remanenzabschätzung eine mittlere Remanenzabschätzung ($\mu_{\omega,n,x}$) ist, die einer Schätzung einer momentanen mittleren Remanenz für jedes der wenigstens einigen Pixel entspricht.

14. Eine Infrarot- Bildgebungsvorrichtung, die Folgendes aufweist:

- ein Mikrobolometer-Array (102); und
- die Bildverarbeitungsvorrichtung (112) nach Anspruch 12 oder 13.

15. Infrarotkamera, die die Infrarot- Bildgebungsvorrichtung nach Anspruch 14 aufweist.

**Claims**

1. A method of removing, by an imaging processing device (112), remanence artifacts from an image ($f_n$) of a sequence of images captured by an infrared imaging device, the method comprising:

- inpainting a zone of remanence (K) in the image ($f_n$) to generate an inpainted image;
- generating a remanence measure ($\omega^*_{n,x}$) for at least some pixels in the image ($f_n$) based on the inpainted image; and
- removing remanence artifacts from at least some pixels of the image ($f_n$) based on a remanence estimation ($\mu_{\omega,n,x}$) for each of the at least some pixels, each remanence estimation ($\mu_{\omega,n,x}$) being generated based on the remanence measures ($\omega^*_{n,x}$) of a plurality of the images in the sequence.

2. The method of claim 1, wherein the remanence estimation is a mean remanence estimation ($\mu_{\omega,n,x}$) corresponding to an estimation of an instantaneous mean remanence for each of the at least some pixels.

3. The method of claim 1 or 2, wherein generating the remanence measure ($\omega^*_{n,x}$) for at least some pixels in the image ($f_n$) comprises subtracting, from each pixel value of the at least some pixels of the image ($f_n$), a pixel value of a corresponding pixel in the inpainted image.

4. The method of any of claims 1 to 3, further comprising detecting the zone of remanence (K) in the image ($f_n$).

5. The method of claim 4, wherein the zone of remanence (K) comprises less than 75% of pixels of the image.

6. The method of any of claims 1 to 5, further comprising calculating the remanence estimation ($\mu_{\omega,n,x}$) for each of the at least some pixels by:

- calculating a moving average of the remanence measures ($\omega^*_{n,x}$) of the image ($f_n$) and of at least one previous image in the sequence.

7. The method of claim 6, wherein the moving average is based on a sliding window of m images in the sequence, m being equal to between 20 and 150.

8. The method of any of claims 1 to 5, further comprising calculating the remanence estimation ($\mu_{\omega,n,x}$) for each of the at least some pixels by applying Kalman filtering.

9. The method of claim 8, wherein calculating the remanence estimation ($\mu_{\omega,n,x}$) by applying Kalman filtering comprises:

- estimating *a priori* the remanence of each of the at least some pixels of the image ($f_n$) based on a previous corrected remanence estimation of each of the at least some pixels and on a model (W) of the exponential decay of the remanence; and
- correcting, for each of the at least some pixels of the image ($f_n$), the estimated remanence based on the corresponding remanence measure ($\omega^*_{n,x}$) to obtain an *a posteriori* estimation ($\mu_{\omega,n,x}$).

10. The method of any of claims 1 to 9, further comprising detecting that the sequence of images corresponds to a changing scene prior to removing the remanence artifacts from the image ($f_n$).

11. A non-transitory storage medium storing computer instructions that, when executed by a processor of an image processing device (112), cause the method of any of claims 1 to 10 to be implemented.

12. An image processing device comprising:

at least one memory (206) storing an image ($f_n$) of a sequence of images captured by an infrared imaging device and one or more remanence measures ($\omega^*_{n,x}$) of at least one previous image in the sequence; and
one or more processors (202) configured to remove remanence artifacts from the image ($f_n$) by:

- inpainting a zone of remanence (K) in the image ($f_n$) to generate an inpainted image;
- generating a remanence measure ($\omega^*_{n,x}$) for at least some pixels in the image ($f_n$) based on the inpainted image; and
- removing remanence artifacts from at least some pixels of the image ($f_n$) based on a remanence estimation ($\mu_{\omega,n,x}$) for each of the at least some pixels, each remanence estimation ($\mu_{\omega,n,x}$) being generated based on the remanence measures ($\omega^*_{n,x}$) of a plurality of the images in the sequence.

13. The image processing device of claim 12, wherein the remanence estimation is a mean remanence estimation ($\mu_{\omega,n,x}$) corresponding to an estimation of an instantaneous mean remanence for each of the at least some pixels.

14. An infrared imaging device comprising:

- a microbolometer array (102); and
- the image processing device (112) of claim 12 or 13.

15. An infrared camera comprising the infrared imaging device of claim 14.

Fig 1

Fig 2

Fig 3

Fig 4

Fig 5

PIXEL
VALUE

Fig 6

PIXEL
VALUE

Fig 7

PIXEL VALUE

Fig 8

Fig 9

Fig 10

530

| Hyper-paramètres de Kalman | | Mesure bruitée de rémanence | | Initialisation des paramètres de Kalman | 1101 |

Paramètres de Kalman

Mise à jour antérieure 1102

1103

Mise à jour postérieure

Rémanence estimée

Fig 11

1200

Fig 12

## RÉFÉRENCES CITÉES DANS LA DESCRIPTION

**Documents brevets cités dans la description**

- FR 1904565
- EP 1727359 A2
- US 7700919 B
- US 14695539 B
- FR 2987210

**Littérature non-brevet citée dans la description**

- **C. GUILLEMOT ; O. LE MEUR.** Image inpainting: Overview and recent advances. *IEEE signal processing magazine,* 2014, vol. 31 (1), 127-144